(19) **Europäisches Patentamt / European Patent Office / Office européen des brevets**

(11) **EP 4 434 672 B1**

(12) **EUROPEAN PATENT SPECIFICATION**

(45) Date of publication and mention
of the grant of the patent:
**28.01.2026   Bulletin 2026/05**

(21) Application number: **23892783.4**

(22) Date of filing: **03.02.2023**

(51) International Patent Classification (IPC):
**B23Q 15/22** (2006.01)        **G05B 19/404** (2006.01)

(52) Cooperative Patent Classification (CPC):
**B23Q 15/22; G05B 19/404;** G05B 2219/36201;
G05B 2219/37613; G05B 2219/49113;
G05B 2219/49177; G05B 2219/49183;
G05B 2219/49191; G05B 2219/50046;
G05B 2219/50142; G05B 2219/50353

(86) International application number:
**PCT/KR2023/001569**

(87) International publication number:
**WO 2024/162503 (08.08.2024 Gazette 2024/32)**

(54) **DEVICE AND METHOD FOR CORRECTING CONCENTRICITY OF MACHINE TOOL SPINDLE**

VORRICHTUNG UND VERFAHREN ZUR KORREKTUR DES RUNDLAUFS EINER
WERKZEUGMASCHINENSPINDEL

DISPOSITIF ET PROCÉDÉ DE CORRECTION DE LA CONCENTRICITÉ D'UNE BROCHE DE
MACHINE-OUTIL

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**25.09.2024   Bulletin 2024/39**

(73) Proprietor: **DN Solutions Co., Ltd.**
**Changwon-si, Gyeongsangnam-do 51537 (KR)**

(72) Inventors:
• **SIM, Jaedoo**
**Gimhae-si, Gyeongsangnam-do 51022 (KR)**

• **CHOI, Hyunmin**
**Changwon-si, Gyeongsangnam-do 51579 (KR)**

(74) Representative: **BCKIP Part mbB**
**MK1**
**Landsbergerstraße 98, 3.Stock**
**80339 München (DE)**

(56) References cited:
JP-A- 2018 140 470        JP-A- 2020 183 007
JP-A- H03 161 246         JP-U- S6 327 245
KR-A- 20210 030 767       KR-A- 20230 105 440
US-A1- 2021 379 709

**Description**

[Technical Field of the Invention]

The present invention relates to a hole machining with a machine tool, and more specifically, to an apparatus and a method of correcting a concentricity of a main spindle for a machine tool to correct and match concentricity errors of holes to be machined in opposite directions by rotating a workpiece 180 °degrees.

[Background of the Invention]

In general, a complex machine tool such as a horizontal machining center may move in a longitudinal direction (Z-axis) and in a direction perpendicular to the longitudinal direction (X-axis), and may include a main spindle equipped with a rotating tool at its end portion and a table mounted with a workpiece on its upper surface while rotatable at least 180 degrees. In such a machine tool, there is a case where a hole having a concentricity should be machined in both directions of the workpiece mounted on the table.

Here, the main spindle equipped with a rotating tool may move in the Z-axis direction and may perform a hole machining operation in the Z-axis direction on the workpiece. When the hole machining operation on one side of the workpiece is completed, the machine tool may rotate the table mounted with the workpiece 180 degrees so that the other side of the workpiece should be positioned in a machining direction of the rotating tool, and the main spindle may move in the Z-axis direction to perform the hole machining operation on the other side of the workpiece. Accordingly, it is necessary that holes machined on both sides of the workpiece by rotating the workpiece 180 degrees have a concentricity in which a center line of each hole is matched with each other.

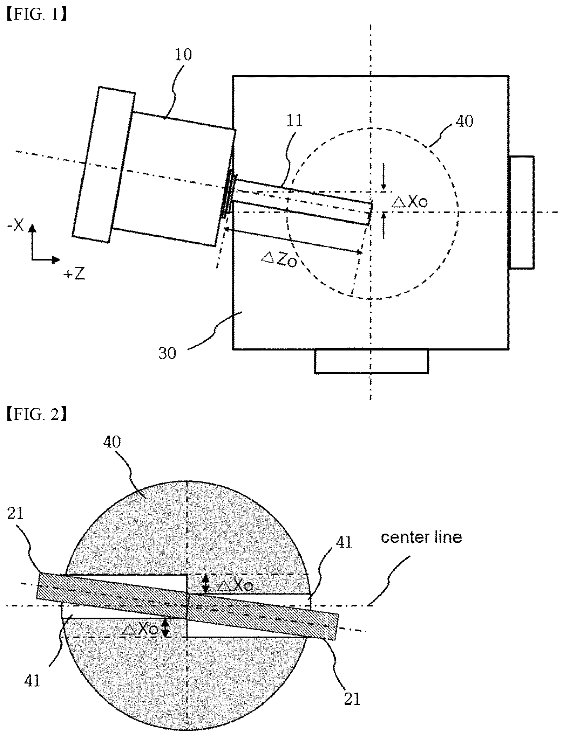

However, as shown in FIG. 1, a main spindle 10 may be inevitably manufactured in a slightly tilted state in a Z-axis direction, i.e., a longitudinal direction of the main spindle 10 in the manufacturing process of the machine tool. For this reason, in a case that a rotating tool 11 for machining a hole 41 is mounted on the main spindle 10 in the Z-axis direction, a parallelism error $\triangle Xo$ may occur where positions of a start point and an end point of the tool 11 extending in a longitudinal direction (Z- axis) are spaced apart from each other in the X-axis direction. In other words, the parallelism error $\triangle Xo$ means a distance in which the start point and the end point of the tool 11 in the Z-axis direction are coincided with a center of the table 30 of the machine tool (a point where its X-axis value is 0), which may be measured through a separate actual measurement means.

As shown in FIG. 2, a parallelism error $\triangle Xo$ of the tool 21 in the Z-axis direction is generated in a case that the main spindle 10 equipped with the tool 21 is moved in the Z-axis direction to machine one hole 41 on one side of the workpiece 40 mounted on the table 30; the table 30 is then rotated 180 degrees; and thereafter another hole 41 is machined on the other side of the workpiece 40. Accordingly, it is noted that these holes 41 machined in opposite directions might have a concentricity error in which each center line of the holes 41 is spaced apart from each other by the parallelism error $\triangle Xo$ of the tool 21.

The concentricity error may cause a variety of problems that when inserting a precise member into both holes 41 or rotating a member inserted in the both holes 41, such the inserting operation of the precise member may not be duly performed, an assembled state of the inserted member may become inaccurate, or noise, vibration and uneven wear may occur during a rotating operation of the member. Such a concentricity error may become larger depending on a length of the rotating tool 21 mounted on the main spindle 10 and a depth of the hole 41 to be machined.

Meanwhile, JP H03-161246 discloses a method of correcting a concentricity of two main spindles of a machine tool which has two main spindles facing each other. This method describes that center positions of two main spindles are detected and a center position of one main spindle should be arranged to match a center position of the other main spindle. This method merely aligns the center positions of two main spindles of a machine tool with two main spindles facing each other. Therefore, correcting the concentricity by aligning the center positions of the two main spindles raises a different issue from a case where in a machine tool with a single main spindle, the main spindle itself is obliquely assembled in an axial direction, and the holes are machined on the workpiece in opposite directions by rotating the table 180 degrees, so the concentricity of the holes machined in opposite directions does not match to each other.

JP 2020 183007 A discloses a cutting machine including a spindle, a tool magazine, a rotary holding member, a tool sensor; and a control device.
KR 2021 0030767 A discloses a tool tip point error correction system and a correction method for a machine tool.

[Disclosure of the Invention]

[Technical Problem]

To resolve the problems discussed above, an object of the present invention is directed to providing an apparatus and a method of matching concentricity of holes to be machined on both sides of a workpiece in a machine tool which is movable in a longitudinal direction (Z-axis) and a direction perpendicular to the longitudinal direction (X-axis) and is equipped with a table rotatable at least 180 degrees, wherein when holes requiring concentricity are machined on both sides of the workpiece by rotating the table 180 degrees, the concentricity of the holes being machined on both sides of the workpiece is coincided with each other despite a parallelism error of the tool in the Z-axis direction mounted on the main spindle.

In addition, another object of the present invention is to provide an apparatus and a method of matching concentricity of holes to be machined on both sides of a workpiece despite changes in a length of a tool mounted on a main spindle.

[Technical Solution]

To achieve the objects discussed above, the present invention provides an apparatus of correcting concentricity of a main spindle of a machine tool according to claim 1, and a method in accordance with claim 3.

The apparatus of the present invention includes: a reference tool information input unit configured to input reference tool information including a reference tool length and a parallelism error of a reference tool parallelism error indicating a degree in which the reference tool is tilted in a longitudinal (Z-axis) direction when the reference tool is installed on a main spindle; a reference tool information storage unit configured to store a reference tool information inputted at the reference tool information input unit and one-half of the parallelism error of the reference tool as a concentricity correction constant of the reference tool; an expected tool to-be-used ("expected tool") information storage unit configured to store length information of an expected tool; a real-time correction amount calculation unit configured to calculate a ratio of a difference between the reference tool length and an expected tool length relative to the reference tool length based on the reference tool information including the reference tool length, the concentricity correction constant and the parallelism error of the reference tool provided from the reference tool information storage unit as well as based on expected tool length information provided from the expected tool information storage unit; and a correction execution unit configured to output a command of correcting a concentricity of the main spindle to correct concentricity errors of holes to be machined on both sides of the workpiece based on a concentricity error correction amount of the main spindle for the expected tool calculated by the real-time correction amount calculation unit.

As a preferred embodiment, the apparatus may further include a correction amount storage unit configured to store the concentricity correction amount of the main spindle for the expected tool calculated by the real-time correction amount calculation unit.

A method of correcting concentricity of a main spindle of a machine tool according to the present invention includes: a reference tool parallelism error measuring step 60 in which a parallelism error of a center line of the main spindle for a reference tool is measured, and one-half of the parallelism error of the reference tool is recorded in a reference tool information storage unit as a concentricity correction constant of the reference tool; an expected tool information inputting step 70 in which an expected tool length for machining holes on a workpiece is inputted in an expected tool information storage unit; a concentricity error correction amount calculating step 80 in which a ratio of the expected tool length relative to a reference tool length is calculated based on reference tool length information including the reference tool length, the parallelism error of the reference tool provided from the reference tool parallelism error measuring step 60 and the concentricity correction constant of the reference tool as well as based on expected tool length information provided from the expected tool information inputting step 70, the parallelism error of the reference tool is applied to the calculated ratio and the concentricity correction constant of the reference tool is then added thereto; and a main spindle parallelism correcting step 90 to execute a command of moving the main spindle by a concentricity error correction amount of the main spindle calculated in the concentricity error correction amount calculating step.

As a preferred embodiment, in the reference tool parallelism error measuring step 60, a parallelism error of the center line of the main spindle may be a distance where a center of an end point in the Z-axis direction of the reference tool is spaced apart in the X-axis direction from a center of a start point of the reference tool when the center of the end point in the Z-axis direction of the reference tool becomes coincident with a center of the table of the machine tool (a point where its X-axis value is 0).

As a preferred embodiment, in the expected tool information inputting step 70, the expected tool length may be retrieved from predefined tool information.

According to the method of the present invention, in the concentricity error correction amount calculating step 80, the concentricity correction amount of the main spindle for the expected tool is calculated by the formula 1.

< Formula 1>

$$\text{Concentricity correction amount of expected tool} = \frac{\Delta Z_0 - \Delta Z_t}{\Delta Z_0} \times \Delta X_0 + \Delta Xto = \Delta X_t + \Delta Xto$$

where $\triangle Xt$ denotes a concentricity correction amount of the main spindle for the expected tool, $\triangle Zo$ denotes a reference tool length, $\triangle Zt$ denotes an expected tool length, $\triangle Xo$ denotes a parallelism error of the reference tool, and $\triangle Xto$ denotes a concentricity correction constant of the reference tool 20.

As a preferred embodiment, in case of a conventional machining that does not require a concentricity correction of the main spindle, the method further includes a step of returning to an initial state without performing the main spindle parallelism correction step 90.

[Advantageous Effects]

In a machine tool including a main spindle which is movable in a longitudinal direction (Z-axis) and a direction perpendicular to the longitudinal direction (X-axis) and a table on which a workpiece is mounted while rotatable at least 180 degrees, when machining holes on both sides of the workpiece by rotating the table 180 degrees, it is possible to perform a precise machining process in which the concentricity of the holes being machined on both sides of the workpiece is matched with each other despite a parallelism error of the tool in the Z-axis direction.

In addition, it is possible to perform a precise machining process in which the concentricity of the holes being machined on both sides of the workpiece is coincided with each other despite changes in a length of a tool mounted on the main spindle.

[Description of Drawings]

In order that the invention may be well understood, there will now be described various forms thereof, given by way of example, reference being made to the accompanying drawings, in which:

FIG. 1 is a schematic diagram illustrating a concentricity error in a Z-axis direction of a center line of a main spindle in the related art.

FIG. 2 is a schematic diagram illustrating a machining state due to a concentricity error of a center line of a main spindle in a Z-axis direction when machining a through-hole on a workpiece in the related art.

FIG. 3 is a schematic block diagram illustrating a control unit of an apparatus of correcting a concentricity error of a center line of a main spindle in a Z-axis direction according to an exemplary embodiment of the present invention.

FIG. 4 is a schematic diagram illustrating a correction of a concentricity error of a center line of a main spindle mounted with a reference tool in a Z-axis direction according to an exemplary embodiment of the present invention.

FIG. 5 is a schematic diagram illustrating a machining state after correction of a concentricity error of a center line of a main spindle mounted with a reference tool in a Z-axis direction according to an exemplary embodiment of the present invention.

FIG. 6 is a flow chart illustrating a correction of a parallelism error of a center line of a main spindle in a Z-axis direction according to an exemplary embodiment of the present invention.

FIG. 7 is a schematic diagram illustrating a correction of a concentricity error of a center line of a main spindle in a Z-axis direction in a case of using an expected tool shorter than the reference tool according to an exemplary embodiment of the present invention.

FIG. 8 is a schematic diagram illustrating a machining state after correction of a concentricity error of a center line of a main spindle in a Z-axis direction when machining a through-hole on a workpiece using an expected tool shorter than the reference tool according to an exemplary embodiment of the present invention.

FIG. 9 is a schematic diagram illustrating a correction of a concentricity error of a center line of a main spindle in a Z-axis direction in a case of using an expected tool longer than the reference tool according to an exemplary embodiment of the present invention.

FIG. 10 is a schematic diagram illustrating a machining state after correction of a concentricity error of a center line of a main spindle in a Z-axis direction when machining a through-hole on a workpiece using an expected tool longer than the reference tool according to an exemplary embodiment of the present invention.

[Detailed Description of the Exemplary Embodiments of the Invention]

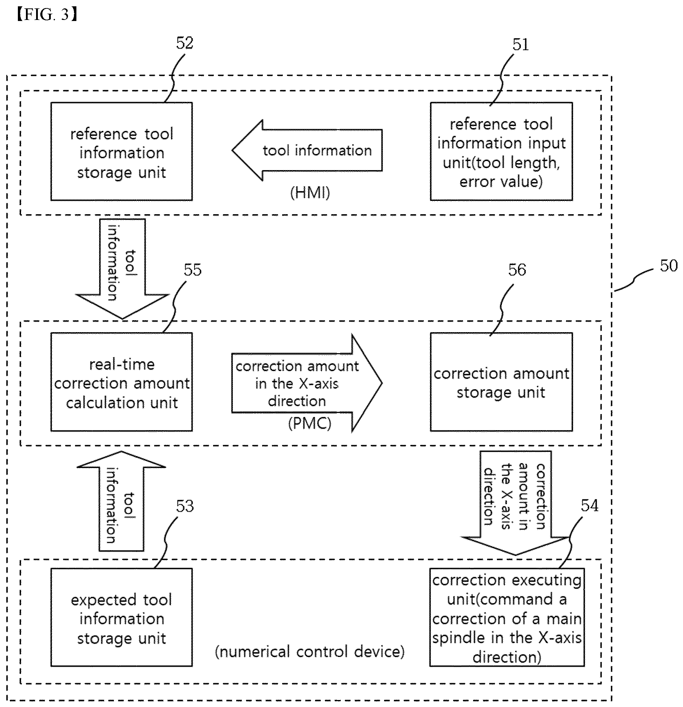

It should be understood that throughout the drawings, corresponding reference numerals indicate like or corresponding parts and features. Hereinafter, exemplary preferred embodiments of the present invention are described in detail with reference to the accompanying drawings, FIGS. 3 to 10.

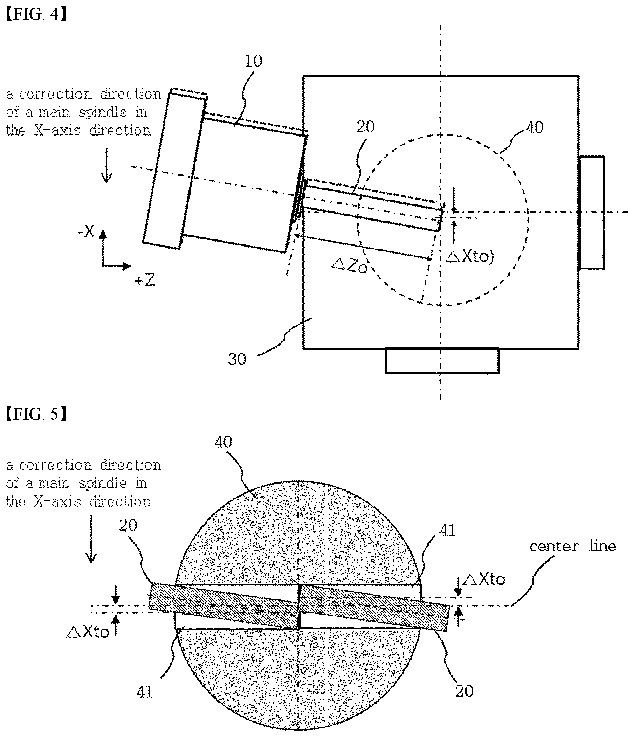

FIG. 3 is a schematic block diagram illustrating a control unit of an apparatus of correcting a concentricity error in a Z-axis direction of a center line of a main spindle according to an exemplary embodiment of the present invention. FIG. 4 is a schematic diagram illustrating a correction of a concentricity error in a Z-axis direction of a center line of a main spindle mounted with a reference tool according to an exemplary embodiment of the present invention. FIG. 5 is a schematic diagram illustrating a machining state after correction of a concentricity error in a Z-axis direction of a center line of a main spindle mounted with a reference tool according to an exemplary embodiment of the present invention.

As shown in FIG. 3, a control unit 50 of a concentricity error correction apparatus of the present invention may include a reference tool information input unit 51 that inputs information about a reference tool 20 to an HMI (Human Machine Interface) of a machine tool and a reference tool information storage unit 52 that stores information on the reference tool 20 inputted in the reference tool information input unit 51.

In general, the HMI (Human Machine Interface) may be a device that communicates information between an operator and the machine tool, to which the operator inputs processing information or tool information, and it may process the information provided from the machine tool and provides the processed information to the operator.

In addition, a reference tool 20 of which information is inputted to the reference tool information input unit 51 is a tool for precisely measuring a parallelism error of a main spindle 10, which indicates a degree of inclination of the reference tool 20 in a Z-axis direction when the reference tool 20 is mounted on the main spindle 10. Referring to FIG. 4, a parallelism error $\triangle Xo$ of the reference tool 20 may be a value which is substantially originated from the parallelism error of the main spindle 10 and is measured by a separate actual measurement device. In other words, the parallelism error $\triangle Xo$ of the reference tool 20 may be a distance where a center of the start point of the reference tool 20 is spaced apart from a center of the table 30 in the X-axis direction, when a center of the end point of the reference tool 20 in the Z-axis direction is coincided with a center (a point where its X-axis value is 0) of the table 30 in the X-axis direction.

Accordingly, when a position of the main spindle 10 is corrected in the X-axis direction by an amount calculated as one-half of the parallelism error $\triangle Xo$, and then holes 41, preferably, through-holes are respectively machined on both sides of the workpiece 40 after rotating the table 180 degrees, the concentricity of the holes 41 being machined may become matched with each other as shown in FIG. 5. In this way, the amount calculated as one-half of the parallelism error $\triangle Xo$ may correspond to the concentricity correction amount of the reference tool 20, which is defined as a concentricity correction constant $\triangle Xto$ of the reference tool 20.

In addition, information of the reference tool 20 stored in the reference tool information storage unit 52 includes a reference tool length $\triangle Zo$, a parallelism error $\triangle Xo$ of the reference tool 20, and a concentricity correction constant $\triangle Xto$.

Meanwhile, a control unit 50 for a concentricity error correction apparatus of the present invention may include, in a numerical control device (Numerical Controller) of the machine tool, an expected tool information storage unit 53 that stores an expected tool length $\triangle Zt$ and a correction executing unit 54 that outputs a command of correcting a concentricity error of the main spindle 10 in the X-axis direction to correct a concentricity error of the holes 41 to be machined on both sides of the workpiece 40.

In addition, a control unit 50 for a concentricity error correction apparatus of the present invention may include, in a PMC (Programmable Machine) of the machine tool, a real-time correction amount calculation unit 55 that receives a reference tool length $\triangle Zo$, a parallelism error $\triangle Xo$ of a reference tool 20 and a concentricity correction constant $\triangle Xto$ from the reference tool information storage unit 52, receives information of the expected tool length $\triangle Zt$, calculates an additional concentricity correction amount $\triangle Xt$ of an expected tool to be used ("expected tool") 21, and adds a concentricity correction constant $\triangle Xto$ to the additional concentricity correction amount $\triangle Xt$ to calculate a concentricity correction amount of the main spindle 10 for the expected tool 21; and a correction amount storage unit 56 that stores the concentricity correction amount of the main spindle 10 for the expected tool 21 which is calculated in the correction amount calculation unit 55.

More specifically, the real-time correction amount calculation unit 55 calculates a ratio of a difference between the reference tool length $\triangle Zo$ and the expected tool length $\triangle Zt$ relative to the reference tool length $\triangle Zo$. The real-time correction amount calculation unit 55 may calculate the additional correction amount $\triangle Xt$ in the X-axis direction for the expected tool 21 by applying the parallelism error $\triangle Xo$ of the reference tool 20 to the calculated ratio, adds the concentricity constant $\triangle Xto$ of the reference tool 20 to the additional correction amount $\triangle Xt$, and calculate the correction amount $\triangle Xto + \triangle Xt$ in the X-axis direction of the main spindle 10 for the expected tool 21.

The calculated concentricity correction amount $\triangle Xto + \triangle Xt$ in the X-axis direction of the main spindle 10 for the expected tool 21 may be provided to the correction execution unit 54 of the numerical control device to correct the main spindle 10 in the X-axis direction by the concentricity correction amount $\triangle Xto + \triangle Xt$. Accordingly, when the workpiece 40 is rotated 180 degrees together with the table 30 and the hole 41 is machined on both sides of the workpiece 40, the concentricity of the holes 41 being machined may be matched to each other.

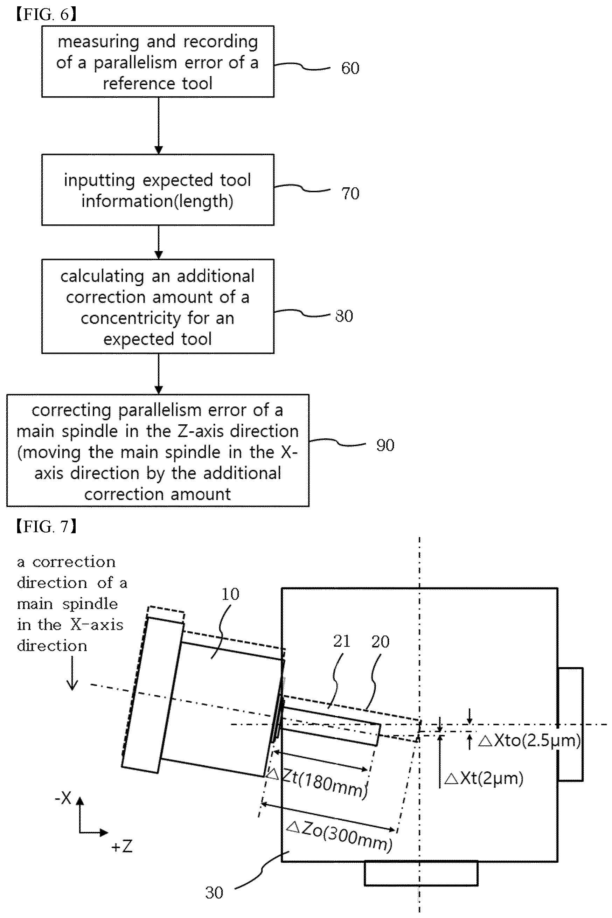

Hereinafter, an apparatus and a method of correcting a concentricity of a main spindle for a machine tool according to exemplary embodiments of the present invention configured as the above will be described. FIG. 6 is a flow chart illustrating a correction of a parallelism error in a Z-axis direction of a center line of a main spindle according to an exemplary embodiment of the present invention.

Referring to FIG. 6, a method of correcting a parallelism error of a center line of a main spindle 10 in the Z-axis direction firstly executes a reference tool parallelism error measuring step 60.

This step may include measuring an amount of a parallelism error △Xo of a reference tool 20 in the Z-axis direction of the main spindle 10 and recording a value of the amount of the parallelism error △Xo wherein a reference tool length △Zo, and a distance in an X-axis direction between a start point and an end point of the reference tool 20 mounted on the main spindle 10 may be measured using a separate measurement device such as a touch sensor, and their values may be inputted as parallelism error △Xo information of the reference tool 20 through a reference tool information input unit 51 and then may be recorded in a reference tool information storage unit 52.

Here, a value corresponding to one-half of the parallelism error △Xo of the reference tool 20 is recorded as a concentricity correction constant △Xto of the reference tool 20 in the reference tool information storage unit 52. In addition, the parallelism error △Xo of the reference tool 20 and the concentricity correction constant △Xto of the reference tool 20 may be values that have been predetermined once for a specified machine tool and maintained until reset later by the operator.

As a next step, an expected tool information inputting step 70 is executed.

This step may input specifications of an expected tool 21 for machining a hole 41 into an expected tool information storage unit 53 provided in the numerical control device, and a length △Zt of the expected tool 21 may be inputted. Typically, information of the expected tool length △Zt may be entered by retrieving the predefined tool information.

As a next step, a concentricity error correction amount calculating step 80 is executed.

In this step, a real-time correction amount calculation unit 55 provided in the PMC may calculate a ratio of the difference between the reference tool length △Zo and the expected tool length △Zt relative to the reference tool length △Zo by using the reference tool length △Zo, the parallelism error △Xo and the concentricity correction constant △Xto of the reference tool 20 provided from the reference tool information storage unit 52, and by using the expected tool length △Zt for machining the hole 41 from the expected tool information storage section 53 provided in the numerical control device; calculate an additional concentricity correction amount △Xt of the expected tool 21 by applying the parallelism error △Xo of the reference tool 21 to the ratio calculated above; and calculate an concentricity correction amount of the main spindle 10 for the expected tool 21 by adding the concentricity correction constant △Xto to the additional concentricity correction amount △Xt .

In other words, the concentricity correction amount of the main spindle 10 for the expected tool 21 is calculated by the Formula 1.

< Formula 1 >

$$\text{Concentricity correction amount of expected tool} = \frac{\Delta Z_0 - \Delta Z_t}{\Delta Z_0} \times \Delta X_0 + \Delta Xto = \Delta X_t + \Delta Xto$$

where △Xt denotes an additional concentricity correction amount of the main spindle 10 for the expected tool 21, △Zo denotes a length of the reference tool 20, △Zt denotes a length of an expected tool 21, △Xo denotes a parallelism error of the reference tool 20, and △Xto denotes a concentricity correction constant of the reference tool 20.

Meanwhile, the additional concentricity correction amount △Xt may be calculated using a trigonometric function calculation method based on the length △Zo of the reference tool 20, the length Zt of the expected tool 21, and the parallelism error △Xo of the reference tool 20.

The concentricity correction amount calculated in the above may be recorded in a correction amount storage unit 56 provided in the PMC.

As a next step, a main spindle parallelism correcting step 90 is executed.

In this step, the concentricity correction amount of the main spindle 10 in the X-axis direction for the expected tool 21 which is stored in the correction amount storage unit 56 of the PMC may be applied to the correction executing unit 54 provided in the numerical control device to output a command of moving the main spindle 10 in the X-axis direction by the concentricity correction amount.

Meanwhile, processes after performing the expected tool information inputting step 70 may be executed whenever a new expected tool 21 is applied. However, in case that the hole 41 requiring a concentricity needs to be continuously machined using the same tool currently in use, there is no need to repeat the process after the tool information inputting step 70 because the concentricity correction amount has already been applied to the main spindle 10. However, in case of a general machining that does not require a concentricity error correction to the main spindle of the machine tool, the concentricity correction amount already applied to the main spindle 10 should be reset or returned to its initial state so as not to affect other machining operations.

Hereinafter, an exemplary embodiment of the present invention in which the expected tool length ($\triangle$Zt) is shorter or longer than the reference tool length $\triangle$Zo will be described. First, an exemplary embodiment in which the expected tool 21 is shorter than the reference tool 20 will be described.

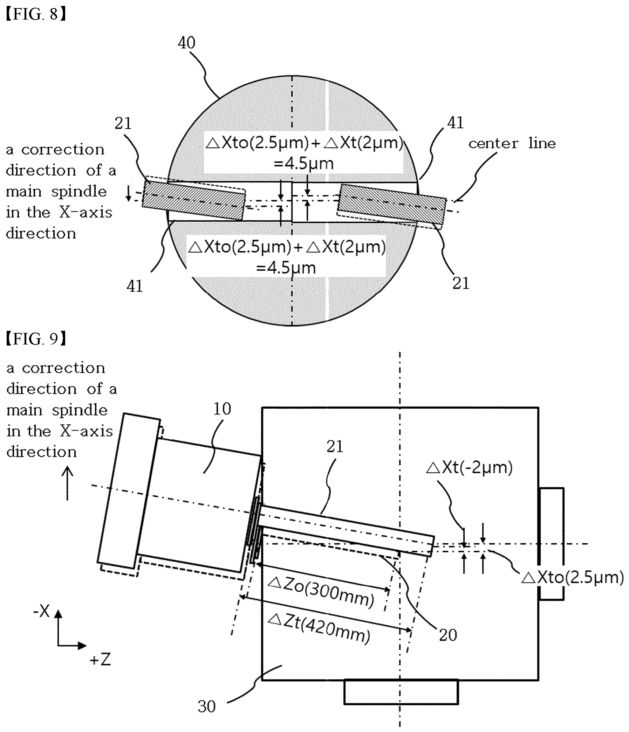

FIG. 7 is a schematic diagram illustrating a correction of a concentricity error in a Z-axis direction of a center line of a main spindle in a case of using an expected tool shorter than the reference tool according to an exemplary embodiment of the present invention. FIG. 8 is a schematic diagram illustrating a machining state after correction of a concentricity error in a Z-axis direction of a center line of a main spindle when machining a hole 41 on a workpiece 40 using an expected tool shorter than the reference tool according to an exemplary embodiment of the present invention.

Referring to FIGS. 7 and 8, in case that the expected tool length $\triangle$Zt is shorter than the reference tool length $\triangle$Zo, the concentricity correction amount for the expected tool 21 may be greater than the concentricity correction constant $\triangle$Xto of the reference tool 20. For example, assuming that the reference tool length $\triangle$Zo is 300 mm, the parallelism error $\triangle$Xo is 5$\mu$m (the concentricity correction constant $\triangle$Xto is 2.5$\mu$m), and the expected tool length $\triangle$Zt is 180mm, the concentricity correction amount of the main spindle 10 for the expected tool 21 may be calculated according to the Formula 1 as below.

$$\text{Concentricity correction amount} = (300\text{mm} - 180\text{mm})/300\text{mm} \times 5\mu\text{m} + 2.5\mu\text{m} = 4.5\mu\text{m}$$

That is, when each of the holes 41 is to be machined on both sides of the workpiece 40 after correcting the main spindle 10 by 4.5 $\mu$m in the X-axis direction, the holes 41 having a matched concentricity may be obtained as shown in FIG. 8.

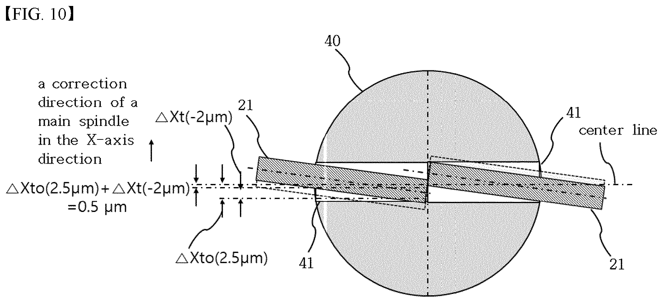

Another exemplary embodiment of the present invention in which the expected tool 21 is longer than the reference tool 20 will be described. FIG. 9 is a schematic diagram illustrating a correction of a concentricity error in a Z-axis direction of a center line of a main spindle in a case of using an expected tool longer than the reference tool according to an exemplary embodiment of the present invention. FIG. 10 is a schematic diagram illustrating a machining state after correction of a concentricity error in a Z-axis direction of a center line of a main spindle when machining a hole on a workpiece using an expected tool longer than the reference tool according to an exemplary embodiment of the present invention.

Referring to FIGS 9 and 10, in case that the expected tool length $\triangle$Zt is longer than the reference tool length $\triangle$Zo, the concentricity correction amount for the expected tool 21 may be smaller than the concentricity correction constant $\triangle$Xto of the reference tool 20. For example, assuming that the reference tool length $\triangle$Zo is 300 mm, the parallelism error $\triangle$Xo is 5$\mu$m (the concentricity correction constant $\triangle$Xto is 2.5$\mu$m), and the expected tool length $\triangle$Zt is 420mm, the concentricity correction amount of the main spindle 10 for the expected tool 21 may be calculated according to the Formula 1 as below.

$$\text{Concentricity correction amount} = (300\text{mm} - 420\text{mm})/300\text{mm} \times 5\mu\text{m} + 2.5\mu\text{m} = 0.5\mu\text{m}$$

That is, when each of the holes 41 is to be machined on both sides of the workpiece 40 after correcting the main spindle 10 by 0.5 $\mu$m in the X-axis direction, the holes 41 having a matched concentricity may be obtained as shown in FIG. 10.

As described in the above exemplary embodiments of the present invention, when machining the holes 41 on both sides of the workpiece 40 by rotating the table 180 degrees using the main spindle 10 having a parallelism error in the longitudinal (Z-axis) direction, it is possible to machine the holes 41 on both sides of the workpiece 40 whose concentricity is matched with each other despite the parallelism error of the main spindle 10 in the Z-axis direction. In addition, it is possible to perform a precise machining process in which the concentricity of the holes 41 being machined on both sides of the workpiece 40 is coincided with each other despite changes in the length of the tool mounted on the main spindle 10.

[Explanation of Signs]

    10: main spindle
    11: tool
    20: reference tool
    21: expected tool to be used
    30: table
    40: workpiece
    41: hole

50: control unit
51: reference tool information input unit
52: reference tool information storage unit
53: expected tool information storage unit
54: correction execution unit
55: real-time correction amount calculation unit
56: correction amount storage unit
60: reference tool parallelism error measuring step
70: expected tool information inputting step
80: concentricity error correction amount calculating step
90: main spindle parallelism correcting step

**Claims**

1. An apparatus for correcting concentricity of a main spindle (10) of a machine tool, the apparatus comprising:

a reference tool information input unit (51) configured to input reference tool information including a reference tool length ($\triangle$Zo) and a parallelism error ($\triangle$Xo) of a reference tool (20) indicating a degree in which the reference tool (20) is tilted in a longitudinal direction (Z-axis) when the reference tool (20) is mounted on the main spindle (10); a reference tool information storage unit (52) configured to store reference tool information inputted in the reference tool information input unit (51) and one-half of the parallelism error ($\triangle$Xo) of the reference tool (20) as a concentricity correction constant ($\triangle$Xto) of the reference tool (20); an expected tool information storage unit (53) configured to store length information of an expected tool (21); a real-time correction amount calculation unit (55) configured to calculate a ratio of a difference between the reference tool length ($\triangle$Zo) and an expected tool length ($\triangle$Zt) relative to the reference tool length ($\triangle$Zo) based on the reference tool information including the reference tool length ($\triangle$Zo), the concentricity correction constant ($\triangle$Xto), and the parallelism error ($\triangle$Xo) of the reference tool (20) provided from the reference tool information storage unit (52) as well as based on expected tool length information provided from the expected tool information storage unit (53); and a correction execution unit (54) configured to output a command of correcting a concentricity of the main spindle (10) to correct concentricity errors of the holes (41) to be machined on both sides of a workpiece (40) in opposite directions by rotating a table (30) on which the workpiece (40) is mounted 180 degrees, based on a concentricity correction amount of the main spindle (10) for the expected tool (21) calculated by the real-time correction amount calculation unit (55).

2. The apparatus of claim 1, further comprising a correction amount storage unit (56) configured to store the concentricity correction amount ($\triangle$Xt) of the main spindle (10) for the expected tool (21) calculated by the real-time correction amount calculation unit (53).

3. A method for correcting concentricity of a main spindle (10) of a machine tool comprising:

a reference tool parallelism error measuring step (60) in which a parallelism error ($\triangle$Xo) of a center line of the main spindle (10) for a reference tool (20) is measured, and one-half of the parallelism error ($\triangle$Xo) of the reference tool (20) is recorded in a reference tool information storage unit (52) as a concentricity correction constant ($\triangle$Xto) of the reference tool (20); an expected tool information inputting step (70) in which an expected tool length ($\triangle$Zt) for machining holes on a workpiece (40) is inputted in an expected tool information storage unit (53); a concentricity error correction amount calculating step (80) in which a concentricity correction amount ($\triangle$Xt) of the main spindle (10) for the expected tool (21) is calculated by Formula 1:

$<$ Formula 1$>$

$$\text{Concentricity correction amount of expected tool} = \frac{\Delta Z_0 - \Delta Z_t}{\Delta Z_0} \times \Delta X_0 + \triangle\text{Xto} = \Delta X_t + \triangle\text{Xto}$$

where $\triangle$Xt denotes a concentricity correction amount of the main spindle of the expected tool, $\triangle$Zo denotes a reference tool length, $\triangle$Zt denotes an expected tool length, $\triangle$Xo denotes a parallelism error of the reference tool

8

(20), and $\triangle$Xto denotes a concentricity correction constant of the reference tool (20); and

a main spindle parallelism correcting step (90) in which a command of moving the main spindle (10) by the concentricity correction amount ($\triangle$Xt) of the main spindle (10) calculated in the concentricity error correction amount calculating step is executed to correct concentricity errors of the holes (41) to be machined on both sides of a workpiece (40) by rotating a table (30) on which the workpiece (40) is mounted 180 degrees.

4. The method of claim 3, wherein in the reference tool parallelism error measuring step (60), the parallelism error ($\triangle$Xo) of the center line of the main spindle (10) is a distance where a center of an end point in the Z-axis direction of the reference tool (20) is spaced apart in the X-axis direction from a center of a start point of the reference tool (20) when the center of the end point in the Z-axis direction of the reference tool (20) becomes coincident with a center of the table (30) of the machine tool, wherein the center of the table (30) of the machine tool is a point where the X-axis value is 0.

5. The method of claim 3, wherein in the expected tool information inputting step (70), the expected tool length ($\triangle$Zt) is retrieved from a predefined tool information.

## Patentansprüche

1. Vorrichtung zur Korrektur der Konzentrizität einer Hauptspindel (10) einer Werkzeugmaschine, wobei die Vorrichtung umfasst:

   eine Einheit (51) zur Eingabe von Informationen über das Referenzwerkzeug, die so konfiguriert ist, dass sie Informationen über das Referenzwerkzeug eingibt, die eine Länge ($\Delta$Zo) des Referenzwerkzeugs und einen Parallelitätsfehler ($\Delta$Xo) eines Referenzwerkzeugs (20), der den Grad angibt, in dem das Referenzwerkzeug (20) in Längsrichtung (Z-Achse) geneigt ist, wenn das Referenzwerkzeug (20) auf der Hauptspindel (10) montiert ist, beinhalten;
   eine Einheit (52) zur Speicherung von Informationen über das Referenzwerkzeug, die so konfiguriert ist, dass sie die in die Einheit (51) zur Eingabe von Informationen über das Referenzwerkzeug eingegebenen Informationen über das Referenzwerkzeug und die Hälfte des Parallelitätsfehlers ($\Delta$Xo) des Referenzwerkzeugs (20) als Konzentrizitätskorrekturkonstante ($\Delta$Xto) des Referenzwerkzeugs (20) speichert;
   eine Einheit (53) zur Speicherung von Informationen über ein erwartetes Werkzeug, die so konfiguriert ist, dass sie Informationen über die Länge eines erwarteten Werkzeugs (21) speichert;
   eine Einheit (55) zur Berechnung eines Korrekturbetrags in Echtzeit, die so konfiguriert ist, dass sie ein Verhältnis einer Differenz zwischen der Länge ($\Delta$Zo) des Referenzwerkzeugs und einer Länge ($\Delta$Zt) des erwarteten Werkzeugs zu der Länge des Referenzwerkzeugs ($\Delta$Zo) basierend auf den Informationen über das Referenzwerkzeug, die die Länge ($\Delta$Zo) des Referenzwerkzeugs, die Konzentrizitätskorrekturkonstante ($\Delta$Xto) und den Parallelitätsfehler ($\Delta$Xo) des Referenzwerkzeugs (20) beinhalten, die von der Einheit (52) zur Speicherung von Informationen über das Referenzwerkzeug bereitgestellt werden, und basierend auf Informationen über die Länge des erwarteten Werkzeugs, die von der Einheit (53) zur Speicherung von Informationen über ein erwartetes Werkzeug bereitgestellt werden, berechnet; und
   eine Einheit (54) zur Ausführung einer Korrektur, die so konfiguriert ist, dass sie einen Befehl zur Korrektur der Konzentrizität der Hauptspindel (10) ausgibt, um Konzentrizitätsfehler der Bohrungen (41), die an beiden Seiten eines Werkstücks (40) in entgegengesetzten Richtungen maschinell zu bearbeiten sind, indem ein Tisch (30), auf dem das Werkstück (40) montiert ist, um 180 Grad gedreht wird, basierend auf einem Konzentrizitätskorrekturbetrag der Hauptspindel (10) für das erwartete Werkzeug (21), der von der Einheit (55) zur Berechnung eines Korrekturbetrags in Echtzeit berechnet wird, zu korrigieren.

2. Vorrichtung nach Anspruch 1, weiterhin umfassend eine Einheit (56) zur Speicherung eines Korrekturbetrags, die so konfiguriert ist, dass sie den von der Einheit (53) zur Berechnung eines Korrekturbetrags in Echtzeit berechneten Konzentrizitätskorrekturbetrag ($\Delta$Xt) der Hauptspindel (10) für das erwartete Werkzeug (21) speichert.

3. Verfahren zur Korrektur der Konzentrizität einer Hauptspindel (10) einer Werkzeugmaschine, umfassend:

   einen Schritt (60) zur Messung des Parallelitätsfehlers eines Referenzwerkzeugs, in dem ein Parallelitätsfehler ($\Delta$Xo) der Mittellinie der Hauptspindel (10) für ein Referenzwerkzeug (20) gemessen wird und die Hälfte des Parallelitätsfehlers ($\Delta$Xo) des Referenzwerkzeugs (20) in einer Einheit (52) zur Speicherung von Informationen über das Referenzwerkzeug als Konzentrizitätskorrekturkonstante ($\Delta$Xto) des Referenzwerkzeugs (20) aufgezeichnet wird;

einen Schritt (70) zur Eingabe von Informationen über ein erwartetes Werkzeug, in dem eine Länge ($\Delta$Zt) des erwarteten Werkzeugs zur maschinellen Bearbeitung von Bohrungen an einem Werkstück (40) in eine Einheit (53) zur Speicherung von Informationen über ein erwartetes Werkzeug eingegeben wird;

einen Schritt (80) zur Berechnung eines Konzentrizitätsfehlerkorrekturbetrags, in dem ein Konzentrizitätskorrekturbetrag ($\Delta$Xt) der Hauptspindel (10) für das erwartete Werkzeug (21) gemäß Formel 1 berechnet wird:

## Konzentrizitätskorrekturbetrag des erwarteten Werkzeugs =

$$\frac{\Delta Z_0 - \Delta Z_t}{\Delta Z_0} \times \Delta X_0 + \Delta Xto = \Delta X_t + \Delta Xto$$

wobei $\Delta$Xt einen Konzentrizitätskorrekturbetrag der Hauptspindel des erwarteten Werkzeugs bezeichnet, $\Delta$Zo die Länge des Referenzwerkzeugs bezeichnet, $\Delta$Zt die Länge des erwarteten Werkzeugs bezeichnet, $\Delta$Xo einen Parallelitätsfehler des Referenzwerkzeugs (20) bezeichnet und $\Delta$Xto eine Konzentrizitätskorrekturkonstante des Referenzwerkzeugs (20) bezeichnet; und

einen Schritt (90) zur Korrektur der Parallelität der Hauptspindel, in dem ein Befehl zur Bewegung der Hauptspindel (10) um den im Schritt (80) zur Berechnung des Konzentrizitätsfehlerkorrekturbetrags (80) berechneten Konzentrizitätskorrekturbetrag ($\Delta$Xt) der Hauptspindel (10) ausgeführt wird, um Konzentrizitätsfehler der Bohrungen (41), die an beiden Seiten eines Werkstücks (40) maschinell zu bearbeiten sind, durch Drehen eines Tisches (30), auf dem das Werkstück (40) montiert ist, um 180 Grad zu korrigieren.

4. Verfahren nach Anspruch 3, wobei in dem Schritt (60) zur Messung des Parallelitätsfehlers des Referenzwerkzeugs der Parallelitätsfehler ($\Delta$Xo) der Mittellinie der Hauptspindel (10) ein Abstand ist, bei dem ein Mittelpunkt eines Endpunkts in Z-Achsenrichtung des Referenzwerkzeugs (20) in X-Achsenrichtung von einem Mittelpunkt eines Startpunkts des Referenzwerkzeugs (20) beabstandet ist, wenn der Mittelpunkt des Endpunkts in Z-Achsenrichtung des Referenzwerkzeugs (20) mit einem Mittelpunkt des Tisches (30) der Werkzeugmaschine übereinstimmt, wobei der Mittelpunkt des Tisches (30) der Werkzeugmaschine ein Punkt ist, an dem der X-Achsenwert 0 ist.

5. Verfahren nach Anspruch 3, wobei in dem Schritt (70) zur Eingabe von Informationen über das erwartete Werkzeug aus vordefinierten Werkzeuginformationen die Länge ($\Delta$Zt) des erwarteten Werkzeugs abgerufen wird.

**Revendications**

1. Dispositif de correction de la concentricité d'une broche principale (10) d'une machine-outil, ledit dispositif comprenant :

une unité d'entrée d'informations d'outil de référence (51) configurée pour l'entrée d'informations d'outil de référence comprenant une longueur d'outil de référence ($\Delta$Zo) et une erreur de parallélisme ($\Delta$Xo) d'un outil de référence (20) indiquant un degré d'inclinaison de l'outil de référence (20) dans une direction longitudinale (axe Z) lorsque l'outil de référence (20) est monté sur la broche principale (10) ;

une unité de mémorisation d'informations d'outil de référence (52) configurée pour stocker des informations d'outil de référence entrées dans l'unité d'entrée d'informations d'outil de référence (51) et la moitié de l'erreur de parallélisme ($\Delta$Xo) de l'outil de référence (20) en tant que constante de correction de concentricité ($\Delta$Xto) de l'outil de référence (20) ;

une unité de mémorisation d'informations d'outil prévu (53) configurée pour stocker des informations de longueur d'un outil prévu (21) ;

une unité de calcul de valeur de correction en temps réel (55) configurée pour calculer le rapport entre une différence entre la longueur d'outil de référence ($\Delta$Zo) et une longueur d'outil prévu ($\Delta$Zt), et la longueur d'outil de référence ($\Delta$Zo), sur la base des informations d'outil de référence comprenant la longueur d'outil de référence ($\Delta$Zo), la constante de correction de concentricité ($\Delta$Xto), et l'erreur de parallélisme ($\Delta$Xo) de l'outil de référence (20) délivrée par l'unité de mémorisation d'informations d'outil de référence (52), et sur la base des informations de longueur d'outil prévu délivrées par l'unité de mémorisation d'informations d'outil prévu (53) ; et

une unité d'exécution de correction (54) configurée pour émettre une instruction de correction de concentricité de la broche principale (10) afin de corriger les erreurs de concentricité des alésages (41) devant être usinés sur les deux côtés d'une pièce (40) dans des directions opposées, par rotation de 180 degrés d'une table (30) sur laquelle la pièce (40) est montée, sur la base d'une valeur de correction de concentricité de la broche principale (10) pour l'outil prévu (21) calculée par l'unité de calcul de valeur de correction en temps réel (55).

**2.** Dispositif selon la revendication 1, comprenant en outre une unité de mémorisation de valeur de correction (56) configurée pour stocker la valeur de correction de concentricité ($\Delta$Xt) de la broche principale (10) pour l'outil prévu (21) calculée par l'unité de calcul de valeur de correction en temps réel (53).

**3.** Procédé de correction de la concentricité d'une broche principale (10) d'une machine-outil, comprenant :

une étape de mesure d'erreur de parallélisme d'outil de référence (60) où une erreur de parallélisme ($\Delta$Xo) d'une ligne centrale de la broche principale (10) pour un outil de référence (20) est mesurée, et une moitié de l'erreur de parallélisme ($\Delta$Xo) de l'outil de référence (20) est enregistrée dans une unité de mémorisation d'informations d'outil de référence (52) en tant que constante de correction de concentricité ($\Delta$Xto) de l'outil de référence (20) ;
une étape d'entrée d'informations d'outil prévu (70) où une longueur d'outil prévu ($\Delta$Zt) pour usiner des alésages sur une pièce (40) est entrée dans une unité de mémorisation d'informations d'outil prévu (53) ;
une étape de calcul de valeur de correction d'erreur de concentricité (80) où une valeur de correction de concentricité ($\Delta$Xt) de la broche principale (10) pour l'outil prévu (21) est calculée au moyen de la formule 1 :

< Formule 1>

$$\text{Valeur de correction de concentricité d'outil prévu} = \frac{\Delta Z_0 - \Delta Z_t}{\Delta z0} \times \Delta X_0 + \Delta X_{to} = \Delta X_z + \Delta X_{to}$$

où $\Delta$Xt désigne une valeur de correction de concentricité de la broche principale de l'outil prévu, $\Delta$Zo désigne une longueur d'outil de référence, $\Delta$Zt désigne une longueur d'outil prévu, $\Delta$Xo désigne une erreur de parallélisme de l'outil de référence (20), et $\Delta$Xto désigne une constante de correction de concentricité de l'outil de référence (20) ; et
une étape de correction de parallélisme de la broche principale (90) où une instruction de déplacement de la broche principale (10) suivant la valeur de correction de concentricité ($\Delta$Xt) de la broche principale (10) calculée lors de l'étape de calcul de valeur de correction d'erreur de concentricité est exécutée pour corriger les erreurs de concentricité des alésages (41) à usiner sur les deux côtés d'une pièce (40) par rotation de 180 degrés d'une table (30) sur laquelle la pièce (40) est montée.

**4.** Procédé selon la revendication 3, où, lors de l'étape de mesure de l'erreur de parallélisme de l'outil de référence (60), l'erreur de parallélisme ($\Delta$Xo) de la ligne centrale de la broche principale (10) est une distance où le centre d'un point terminal de l'outil de référence (20) dans la direction d'axe Z est espacé du centre d'un point initial de l'outil de référence (20) dans la direction d'axe X lorsque le centre du point terminal de l'outil de référence (20) dans la direction d'axe Z coïncide avec le centre de la table (30) de la machine-outil, ledit centre de la table (30) de la machine-outil étant un point où la valeur de l'axe X est 0.

**5.** Procédé selon la revendication 3, où, lors de l'étape d'entrée d'informations d'outil prévu (70), la longueur d'outil prévu ($\Delta$Zt) est extraite d'informations d'outil prédéfinies.

【FIG. 1】

【FIG. 2】

【FIG. 3】

【FIG. 4】

a correction direction
of a main spindle in
the X-axis direction

10

20

40

-X

+Z

△Zo

△Xto)

30

【FIG. 5】

40

a correction direction
of a main spindle in
the X-axis direction

20

41

center line

△Xto

△Xto

41

20

【FIG. 6】

```
measuring and recording
of a parallelism error of a          ⌇ 60
reference tool
          │
          ▼
inputting expected tool
information(length)                  ⌇ 70
          │
          ▼
calculating an additional
correction amount of a
concentricity for an                 ⌇ 80
expected tool
          │
          ▼
correcting parallelism error of a
main spindle in the Z-axis direction
(moving the main spindle in the X-   ⌇ 90
axis direction by the additional
correction amount
```

【FIG. 7】

a correction direction of a main spindle in the X-axis direction

10

21  20

△Xto(2.5μm)

△Xt(2μm)

△Zt(180mm)

△Zo(300mm)

-X

+Z

30

【FIG. 8】

a correction
direction of a
main spindle
in the X-axis
direction

△Xto(2.5μm)+△Xt(2μm)
=4.5μm

center line

△Xto(2.5μm)+△Xt(2μm)
=4.5μm

【FIG. 9】

a correction
direction of a
main spindle
in the X-axis
direction

△Xt(-2μm)

△Xto(2.5μm)

△Zo(300mm)

△Zt(420mm)

-X

+Z

【FIG. 10】

a correction direction of a main spindle in the X-axis direction

$\triangle Xt(-2\mu m)$

$\triangle Xto(2.5\mu m)+\triangle Xt(-2\mu m)$ $=0.5\ \mu m$

$\triangle Xto(2.5\mu m)$

40

41
center line

21

41

21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H03161246 B
- JP 2020183007 A

- KR 20210030767 A